# EUROPEAN PATENT SPECIFICATION

(11) **EP 4 393 805 B1**
(45) Date of publication and mention of the grant of the patent: **01.10.2025**
(21) Application number: 23382876.3
(22) Date of filing: 25.08.2023
(51) Int. Cl.: B62K 25/30, B62K 25/28, B62K 3/04, B62K 19/34, B62J 11/04

(54) **BICYCLE FRAME WITH ACCESSIBLE BUILT-IN DAMPING**
FAHRRADRAHMEN MIT ZUGÄNGLICHER EINGEBAUTER DÄMPFUNG
CADRE DE BICYCLETTE AVEC AMORTISSEMENT INTÉGRÉ ACCESSIBLE

(30) Priority: 27.12.2022 ES 202231112
(43) Date of publication of application: 03.07.2024
(73) Proprietor: Berria Bike, S.L., 02611 Ossa de Montiel (ES)
(72) Inventor: VITORIA CANO, JOSE, 02600 VILLAROBLEDO (ES)
(74) Representative: Espiell Gomez, Ignacio

(56) References cited:
- CN-U- 217 456 237
- TW-U- M 626 633

## Description

### OBJECT OF THE INVENTION

The invention, as stated in the title of the present specification, relates to a bicycle frame with accessible built-in damping which contributes, to its intended use, advantages and features, which are described in detail further on, which imply an improvement in the current state of the art.

The object of the present invention falls on a bicycle frame, preferably a double mountain bicycle frame, or double suspension MTB, which, being of the type that has at least one damping element internally built into a housing of one of the tubes that make up the frame, is essentially distinguished by presenting an opening for access to said housing provided with a removable cover, which advantageously allows easy access to the damper to remove same and carry out maintenance or carry out adjustment work thereof without having to remove same. In addition, the opening with the cover, which is located in the lower area of the seat tube of the frame, has means for attaching an additional bottle holder.

### FIELD OF APPLICATION OF THE INVENTION

The field of application of the present invention falls within the sector of the industry dedicated to the manufacture of bicycles, focusing particularly on the field of double suspension MTB bicycles, covering both the manufacture and design of the frame and the accessories for the same.

### BACKGROUND OF THE INVENTION

As is known, double bicycles or double suspension bicycles are those bicycles, usually MTB bicycles (all-terrain or mountain bikes) which, as their name suggests, have a double suspension system. On the one hand, the front suspension known as the fork of the bicycle and on the other hand, the rear suspension placed in the centre of the bicycle.

Likewise, for example document US10071786 is known in the state of the art, double suspension bicycles with at least one damping element built into the frame tubes, contributing, as a main advantage, that said damper does get dirty, which in MTBs is something inevitable, since they usually ride on dirt terrain and roads, often muddy, so that the dampers are constantly attacked by particles that impair their effectiveness.

This solution, however, has the drawback that, since the damper is housed inside the frame tube, its access for the unavoidable cleaning, adjustment or maintenance tasks that same requires becomes laborious and complex, since they necessarily involve disassembling the frame and/or damper to remove same from one end of the tube, usually from the lower portion, using wrenches or other tools.

The objective of the present invention is, therefore, to provide a frame system with a built-in damper in which it is quicker and easier to access the damping element in order to carry out said adjustment, maintenance or extraction tasks for its replacement.

Additionally, another objective of the present invention is to take advantage of the design of the frame with accessible built-in damper to provide a support space to be able to couple a bottle holder, since another of the drawbacks of this type of double suspension bicycles is that, by including the damper projected/attached to the upper tube or the lower tube, they only have space to place a bottle holder on the lower tube of the frame. Thus, another advantage of the frame of the invention is that with same, if desired, two bottle holders can be placed and, consequently, the user can carry two canisters to have a larger amount of drink or two different types of drink during sports practice or even to carry a drink bottle and a container to store tools or food.

Document TWM626633U discloses a hidden shock-absorbing frame. Said TWM626633U constitutes the closest prior art with respect to the subject-matter of independent claim 1, and discloses:
A bicycle frame with accessible built-in damping comprising: - a front rim, defined by a lower inclined tube and a vertical seat tube, the lower tube being joined by a steering tube in which a front fork of the bicycle can be inserted, and a rear tilting rim; - at least one damping element internally built into a housing provided for this purpose within the tubes that make up the frame; - an opening for access to the housing in the frame; and - a removable cover which, once in place, completely covers and closes said opening for access to the housing with the damping element, wherein the opening for access to the housing is located at the upper portion of said housing when the bicycle is in the normal position of use.

Document CN217456237U discloses a seat tube structure capable of hiding a shock absorption device.

Furthermore, and as a reference to the current state of the art, it should be noted that at least the applicant is unaware of the existence of any other bicycle frame with accessible built-in damping, or any other invention of similar application, which presents technical and constitutive features that are the same or similar to those presented by that which is claimed herein.

### DESCRIPTION OF THE INVENTION

A bicycle frame with accessible built-in damping according to the invention is provided in independent claim 1. Preferred embodiments of the invention are provided in the dependent claims.

The bicycle frame with accessible built-in damping proposed by the invention is configured as the ideal solution to the aforementioned objective, the characterising details that make it possible and that distinguish it being conveniently included in the final claims that accompany this description.

Specifically, what the invention proposes, as previously noted, is a bicycle frame of the type that has at least one damping element internally built into a housing provided for this purpose within the tubes that make up the frame such that said damper is protected from dust and mud, and is essentially distinguished in that it has an opening for easy access to said housing from its upper or front portion thanks to which, in turn, damper cleaning tasks or adjustment can be carried out without having to disassemble or extract same.

In addition, to prevent dirt or foreign elements from entering, said opening has an easily removable cover that allows same to be closed and the damper to be protected. The cover comprises means for attaching an additional bottle holder

In a preferred embodiment of the invention, the frame is a double suspension frame, normally designed for mountain or MTB bicycles, which normally define a front triangular rim, made up of the upper tube, the lower tube and the seat tube, the upper and lower tube being attached at a fairly acute angle to the steering tube of the fork that constitutes the front damping, and a rear double tilting rim, which is coupled by means of a rear damping element that, in fact, is located approximately at the centre of the bicycle.

That said, in the frame that is the object of the invention, the joining vertex between the lower tube or diagonal tube and the seat tube defines a volume that defines an interior space constituting a housing suitable for incorporating the rear damper, said damper being attached by at least one end to one of the two articulated joints provided superiorly and inferiorly in said volume and to which are coupled the ends of the respective sheaths that make up the lateral rim of each side of the rear tilting assembly, known as the main pivot point.

In addition, preferably, the opening of said housing is located on the internal upper face of said vertex or joining area between the tubes that define said volume, i.e., that which is oriented towards the hole in the front rim of the frame. In this way, access to the housing to manipulate the damper can be done from the front portion, with full comfort, allowing its removal easily and quickly as well as its adjustment, maintenance or cleaning without having to disassemble same if it is not required.

To do this, preferably, the opening for easy access to the damper housing covers a portion of both the lower tube and the seat tube, to allow, where appropriate, the passage of the damper, for its placement or removal and to allow the introduction of attachment or cleaning tools, etc.

For its part, preferably, the removable cover that covers said opening is made up of a part with a complementary configuration to the shape of the aforementioned opening of the housing and, therefore, with an approximately V-shaped configuration and grooved section, such that it covers and closes the respective lower tube and seat tube open sections.

In any case, said part that makes up the cover, which instead of being metallic like the rest of the frame, is preferably made of plastic, carbon or other plastic or thermosetting-based materials, allowing a slight reduction in weight, has respective extensions at both ends that constitute respective fastening points to attach same to the respective tubes of the frame. Said fastening points can be by threading, by clipping, by some other attachment mechanism or any combination thereof.

Preferably, the attachment means for the bottle holder are defined by respective holes, in the form of inserts or self-threading rivets, provided in the middle area of the body of the cover, suitable for attaching a conventional bottle holder by means of screwing.

In short, the advantages of the frame object of the invention are:
- easy accessibility to the damping element, as the opening of the housing is located on the front and upper portion and sized to be able to extract or access said damper,
- a slight reduction in weight, as the cover is made of plastic,
- being able to incorporate another bottle holder for drinks, or a container holder to store objects, by arranging the cover with means for attachment thereof,
- providing protection against dust and mud or other foreign elements that may affect the damper.

### DESCRIPTION OF THE DRAWINGS

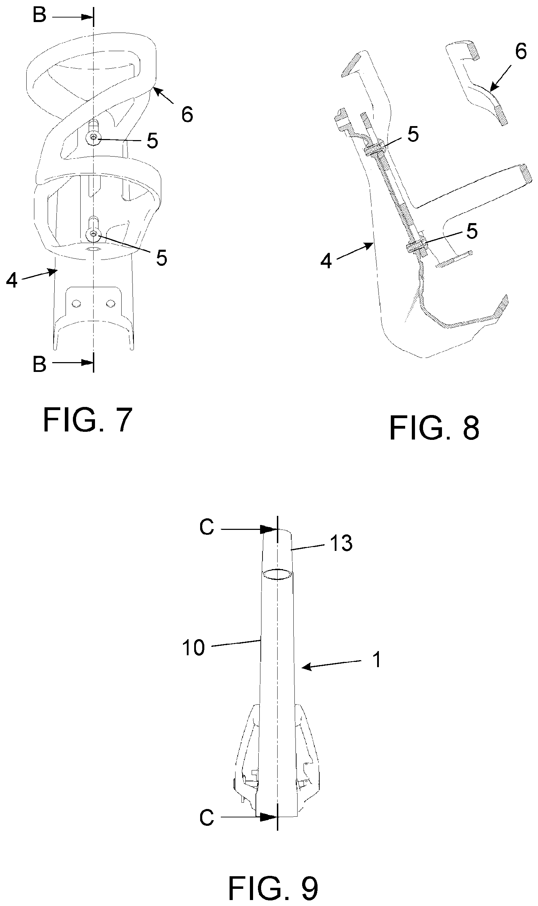

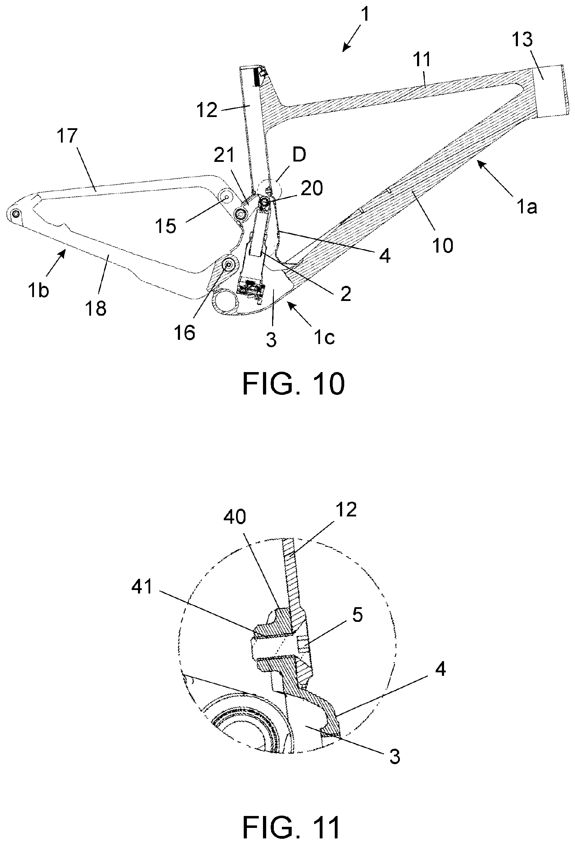

To complete the description, and for the purpose of helping to make the features of the invention more readily understandable, this description is accompanied by a set of drawings constituting an integral part of the same, which by way of illustration and not limitation represents the following:
figure number 1 shows a perspective view of an embodiment of the bicycle frame with accessible built-in damping object of the invention, represented with the opening of the housing for the damper uncovered by the cover, the arrangement of said damper inside being observed;
figures 2 and 3 show respective perspective views of the removable cover comprising the frame of the invention to cover the opening of the damper housing, according to the example of figure 1, its configuration and the parts and elements it comprises being observed;
figure number 4 shows a front elevation view of the cover shown in figures 2 and 3;
figure number 5 shows a cross sectional view of the cover, according to section A-A indicated in figure 4;
figures 6 and 7 again show a perspective and front elevation view of the removable cover, according to the example shown in the preceding figures, including the bottle holder support, its arrangement attached by means of screws being observed;
figure number 8 shows a cross sectional view of the cover with the bottle holder support according to section B-B indicated in figure 7;
figure number 9 shows a front elevation view of the frame object of the invention;
figure number 10 shows a cross sectional view of the frame according to section C-C indicated in figure 9, the configuration and internal parts being observed, particularly the housing for the damping element, the arrangement of said element and that of the removable cover that covers the opening thereof;
figure number 11 shows an enlarged view of detail D indicated in figure 10 and which allows a better appreciation of one of the attachment points of the removable cover; and

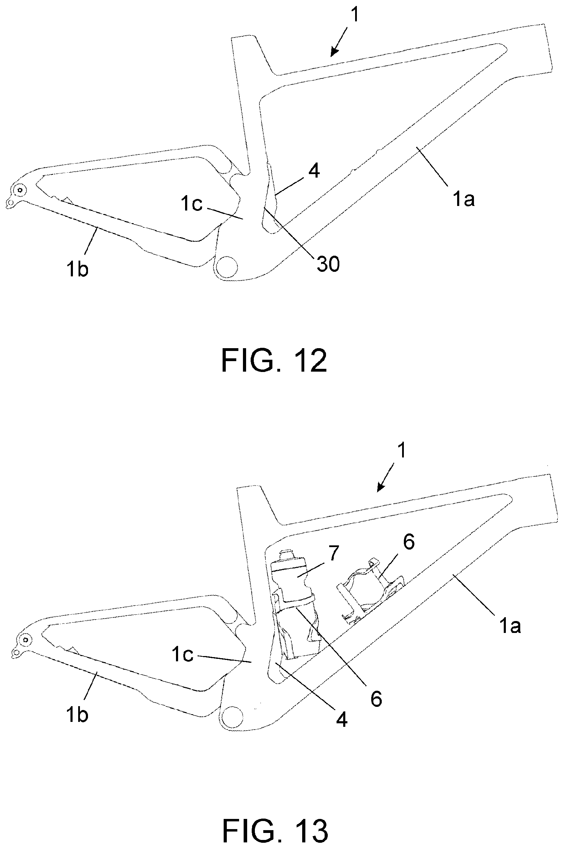

figures 12 and 13 show respective side elevation views of the bicycle frame of the invention, according to the example shown in the preceding figures, having been represented in Figure 12 with the cover incorporated over the opening of the housing for the damper and without explicitly showing the bottle holder support and in figure 13 with the bottle holder support incorporated into the cover and another bottle holder support attached in the conventional position on the lower tube of the frame.

### PREFERRED EMBODIMENT OF THE INVENTION

In view of the aforementioned figures, and in accordance with the adopted numbering, one may observe therein a non-limiting exemplary embodiment of the bicycle frame with accessible built-in damping of the invention, comprising what is described in detail below.

Thus, as can be seen in said figures, the bicycle frame (1) of the invention, made up of a front triangular rim (1a), defined by a lower inclined tube (10), an upper horizontal tube (11) and a vertical seat tube (12), the upper tube (11) and the lower tube being joined by the steering tube (13) in which the front fork is inserted, and a rear tilting rim (1b) defined by two pairs of sheaths (17, 18), is of the type that has at least one damping element (2) internally built into a housing (3) provided for this purpose within the tubes that make up the frame (1).

And, based on said already known configuration, the frame (1) in question is essentially distinguished by comprising:
- an opening (30) for access to the housing (3), which, preferably being located at the upper portion of said housing (3) (with the bicycle in the normal position of use), has a shape and dimension such that it allows both the removal and placement of the damper (2) and the carrying out of cleaning, adjustment and/or maintenance tasks on said damper (2) without having to disassemble or remove same; and
- a removable cover (4) that, once in place, completely covers and closes said opening (30) for access to the housing (3) with the damper (2), keeping it protected against the entry of dust and mud or other foreign bodies that may impair its operation.

Preferably, the housing (3) of the frame (1) in which the damper (2) is incorporated is located in the lower joining vertex between the lower tube (10) and the seat tube (12), being defined by the hollow interior space determined by the existence of a volume (1c) provided for this purpose in said vertex of the front rim (1a) of the frame (1).

Preferably, the damper (2) is attached at one end (20) to one of the two articulated joints, one upper (15) and the other lower (16), provided in the aforementioned volume (1c) and to which are coupled the ends of the respective pairs of upper (17) and lower (18) sheaths that make up the rear tilting rim (1b).

More specifically, as can be seen in figure 10, the upper end (20) of the damper (2) is attached, by interposing a connecting rod (21), to the upper articulated joint (15) of the rear tilting rim (1b) of the frame (1).

In any case, preferably, the opening (30) of the housing (3) is located on the upper internal face of the volume (1c) defined at the joining vertex between the lower (10) and seat (12) tubes, facing frontally towards the hollow of the front rim (1a) of the frame.

Preferably, this opening (30) for access to the housing (3) covers a portion of the lower tube (10) and a portion of the seat tube (12).

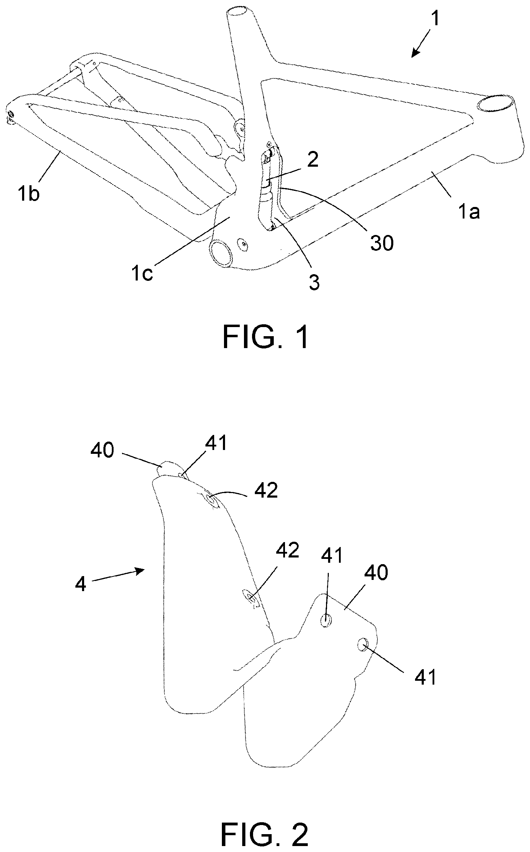

For its part, the cover (4) is preferably made in a single piece, preferably made of plastic or of plastic or thermosetting composite materials, with a complementary configuration to the shape of the aforementioned opening (30) of the housing (3), and therefore, preferably, it has an approximately V- or L-shaped configuration and a grooved section, as can be seen in figures 2 to 5, so that it covers and closes the respective sections of the lower tube (10) and the seat tube (12) which covers the opening (30) of the housing (3).

In any case, the cover (4) has attachment means for attaching same to the frame on said opening (30) of the housing (3). Preferably, said means are provided in respective extensions (40) at both ends of the part that makes up said cover (4), and consist, for example, of holes (41) for threading screws (5) as shown in the detail of figure 11, but without ruling out others, for example for attachment by clipping, or another attachment mechanism.

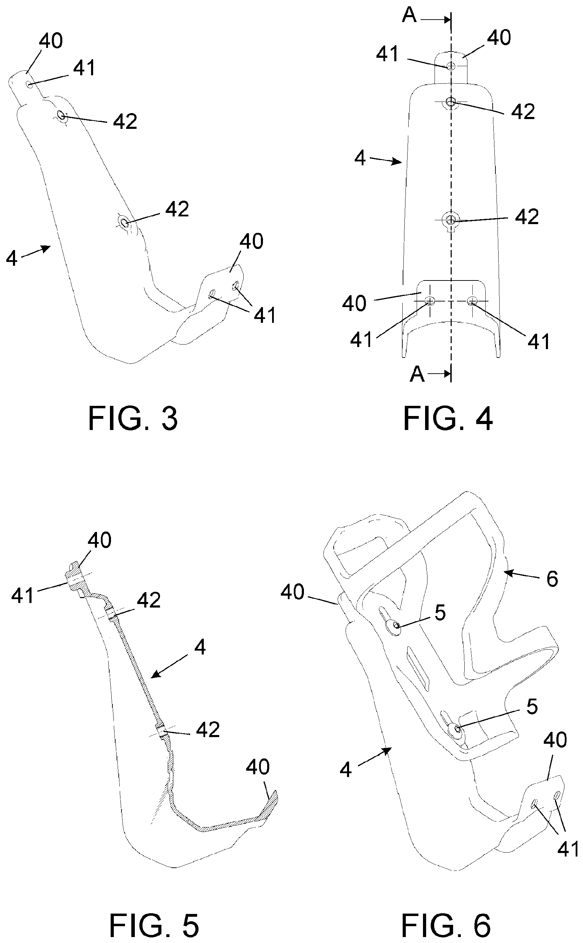

In addition the removable cover (4) further comprises means, such as, for example, perforations (42), intended to allow the attachment on same of a bottle holder or container holder support (6) to be able to incorporate a bottle (7) for drinks, a container for objects or tools. Figures 6 to 8 show the arrangement of said support (6) on the upper area of the cover (4) and its attachment to same by means of screws (5) inserted in the perforations (42) provided for this purpose.

In this way, as shown in figure 13, the frame (1) of the invention allows the incorporation of up to two bottle holder supports (6), one on the lower tube (10), as is usual, and an additional one on the cover (4) that closes the opening (30) of the housing (3) for the built-in damper (2).

The scope of the invention is defined by the appended claims.

## Claims

1. A bicycle frame with accessible built-in damping comprising:
• a front triangular rim (1a), defined by a lower inclined tube (10), an upper horizontal tube (11) and a vertical seat tube (12), the upper tube (11) and the lower tube being joined by a steering tube (13) in which a front fork of the bicycle can be inserted, and a rear tilting rim (1b);
• at least one damping element (2) internally built into a housing (3) provided for this purpose within the tubes that make up the frame (1);
• an opening (30) for access to the housing (3) in the frame (1); and
• a removable cover (4) which, once in place, completely covers and closes said opening (30) for access to the housing (3) with the damping element (2),
wherein the opening (30) for access to the housing (3) is located at the upper portion of said housing (3) when the bicycle is in the normal position of use,
wherein the cover (4) comprises means configured for the attachment of a bottle holder or container holder support (6).

2. The bicycle frame with accessible built-in damping according to claim 1 wherein the housing (3) in which the damping element (2) is incorporated is located at the joining vertex between the lower tube (10) and the seat tube (12), being defined by the hollow interior space determined by a volume (1c) provided for this purpose at said vertex of the front rim (1a).

3. The bicycle frame with accessible built-in damping according to claim 2, wherein the opening (30) of the housing (3) is located on the upper internal face of the volume (1c) defined at the joining vertex between the lower (10) and seat (12) tubes, facing frontally towards the hollow of the front rim (1a) of the frame.

4. The bicycle frame with accessible built-in damping according to claim 3, wherein the opening (30) for access to the housing (3) covers a portion of the lower tube (10) and a portion of the seat tube (12).

5. The bicycle frame with accessible built-in damping according to any of the preceding claims, wherein the cover (4) is made up of a piece of plastic or of plastic or thermosetting composite materials.

6. The bicycle frame with accessible built-in damping according to any of the preceding claims, wherein the cover (4) has attachment means for attaching same to the frame on the opening (30) of the housing (3).

7. The bicycle frame with accessible built-in damping according to claim 6, wherein the attachment means for attaching the cover (4) to the frame on the opening (30) of the housing (3) comprise extensions (40) at both ends of the part that makes up said cover (4) that overlap with the frame of the bicycle.

8. The bicycle frame with accessible built-in damping according to claim 7, wherein the extensions (40) comprise threaded holes (41) to allow the attachment of the cover (4) to the frame by means of screws (5).

## Patentansprüche

1. Fahrradrahmen mit zugänglicher eingebauter Dämpfung, umfassend:
• eine vordere dreieckige Felge (1a), die durch ein unteres schräges Rohr (10), ein oberes horizontales Rohr (11) und ein vertikales Sattelrohr (12) definiert ist, wobei das obere Rohr (11) und das untere Rohr durch ein Lenkrohr (13) verbunden sind, in das eine Vorderradgabel des Fahrrads eingesetzt werden kann, und eine hintere kippbare Felge (1b);
• mindestens ein Dämpfungselement (2), das in einem dafür vorgesehenen Gehäuse (3) innerhalb der Rohre des Rahmens (1) eingebaut ist;
• eine Öffnung (30) für den Zugang zum Gehäuse (3) im Rahmen (1); und
• eine abnehmbare Abdeckung (4), die, sobald sie angebracht ist, die Öffnung (30) für den Zugang zum Gehäuse (3) mit dem Dämpfungselement (2) vollständig abdeckt und verschließt,
wobei sich die Öffnung (30) für den Zugang zum Gehäuse (3) in der normalen Gebrauchsposition des Fahrrads im oberen Bereich des Gehäuses (3) befindet, wobei die Abdeckung (4) Mittel umfasst, die für die Befestigung eines Flaschen- oder Behälterhalters (6) ausgebildet sind.

2. Fahrradrahmen mit zugänglicher eingebauter Dämpfung nach Anspruch 1
wobei das Gehäuse (3), in welches das Dämpfungselement (2) eingebaut ist, am Verbindungsscheitelpunkt zwischen dem unteren Rohr (10) und dem Sattelrohr (12) angeordnet ist, und es durch den hohlen Innenraum definiert ist, der durch ein dafür vorgesehenes Volumen (1c) am Scheitelpunkt der vorderen Felge (1 a) vorgesehen ist.

3. Fahrradrahmen mit zugänglicher eingebauter Dämpfung nach Anspruch 2,
wobei sich die Öffnung (30) des Gehäuses (3) auf der oberen Innenseite des Volumens (1c) befindet, das am Verbindungsscheitelpunkt zwischen dem unteren Rohr (10) und dem Sattelrohr (12) definiert ist, und nach vorne zum Hohlraum der vorderen Felge (1 a) des Rahmens zeigt.

4. Fahrradrahmen mit zugänglicher eingebauter Dämpfung nach Anspruch 3,
wobei die Öffnung (30) für den Zugang zum Gehäuse (3) einen Teil des unteren Rohrs (10) und einen Teil des Sattelrohrs (12) abdeckt.

5. Fahrradrahmen mit zugänglicher eingebauter Dämpfung nach einem der vorhergehenden Ansprüche, wobei die Abdeckung (4) aus einem Stück Kunststoff oder aus Kunststoff- oder wärmehärtenden Verbundwerkstoffen besteht.

6. Fahrradrahmen mit zugänglicher eingebauter Dämpfung nach einem der vorhergehenden Ansprüche, wobei die Abdeckung (4) Befestigungsmittel zur Befestigung am Rahmen an der Öffnung (30) des Gehäuses (3) aufweist.

7. Fahrradrahmen mit zugänglicher eingebauter Dämpfung nach Anspruch 6, wobei die Befestigungsmittel zur Befestigung der Abdeckung (4) am Rahmen an der Öffnung (30) des Gehäuses (3) Verlängerungen (40) an beiden Enden des die Abdeckung (4) bildenden Teils umfassen, die den Rahmen des Fahrrads überlappen.

8. Fahrradrahmen mit zugänglicher eingebauter Dämpfung nach Anspruch 7, wobei die Verlängerungen (40) Gewindelöcher (41) aufweisen, um die Befestigung der Abdeckung (4) am Rahmen mit Hilfe von Schrauben (5) zu ermöglichen.

## Revendications

1. Cadre de bicyclette avec amortissement intégré accessible comprenant :
• un bord triangulaire avant (1a), défini par un tube incliné inférieur (10), un tube horizontal supérieur (11) et un tube de selle vertical (12), le tube supérieur (11) et le tube inférieur sont reliés par un tube de direction (13) où une fourche avant de la bicyclette peut être insérée, et une jante arrière basculante (1b) ;
• au moins un élément amortisseur (2) intégré à l'intérieur d'un logement (3) prévu à cet effet au sein des tubes qui constituent le cadre (1) ;
• une ouverture (30) permettant l'accès au logement (3) dans le cadre (1) ; et
• un cache amovible (4) qui, une fois en place, recouvre et ferme complètement ladite ouverture (30) permettant l'accès au logement (3) avec l'élément amortisseur (2),
dans lequel l'ouverture (30) permettant l'accès au logement (3) est située au niveau de la portion supérieure dudit logement (3) lorsque la bicyclette est dans la position normale d'utilisation, dans lequel le cache (4) comprend des moyens conçus pour la fixation d'un support de porte-bouteille ou de porterécipient (6).

2. Cadre de bicyclette avec amortissement intégré accessible selon la revendication 1
dans lequel le logement (3) où l'élément amortisseur (2) est incorporé est situé au niveau du sommet de jonction entre le tube inférieur (10) et le tube de selle (12), étant défini par l'espace intérieur creux déterminé par un volume (1c) prévu à cet effet au niveau dudit sommet de la jante avant (1a).

3. Cadre de bicyclette avec amortissement intégré accessible selon la revendication 2,
dans lequel l'ouverture (30) du logement (3) est située sur la face interne supérieure du volume (1c) défini au niveau du sommet de jonction entre les tubes inférieur (10) et de selle (12), faisant face frontalement vers le creux de la jante avant (1a) du cadre.

4. Cadre de bicyclette avec amortissement intégré accessible selon la revendication 3,
dans lequel l'ouverture (30) permettant l'accès au logement (3) couvre une portion du tube inférieur (10) et une portion du tube de selle (12).

5. Cadre de bicyclette avec amortissement intégré accessible selon l'une quelconque des revendications précédentes, dans lequel le cache (4) est constitué d'une pièce de plastique ou de matériaux composites plastiques ou thermodurcissables.

6. Cadre de bicyclette avec amortissement intégré accessible selon l'une quelconque des revendications précédentes, dans lequel le cache (4) a des moyens de fixation permettant de fixer celui-ci au cadre sur l'ouverture (30) du logement (3).

7. Cadre de bicyclette avec amortissement intégré accessible selon la revendication 6, dans lequel les moyens de fixation du cache (4) au cadre sur l'ouverture (30) du logements (3) comprennent des extensions (40) au niveau des deux extrémités de la partie qui constitue ledit cache (4) qui se superposent au cadre de la bicyclette.

8. Cadre de bicyclette avec amortissement intégré accessible selon la revendication 7, dans lequel les extensions (40) comprennent des trous filetés (41) pour permettre la fixation du cache (4) au cadre au moyen de vis (5).
